(19) **Europäisches Patentamt**
**European Patent Office**
**Office européen des brevets**

(11) **EP 4 582 371 A1**

(12) **EUROPEAN PATENT APPLICATION**
published in accordance with Art. 153(4) EPC

(43) Date of publication:
**09.07.2025 Bulletin 2025/28**

(21) Application number: **23860248.6**

(22) Date of filing: **28.08.2023**

(51) International Patent Classification (IPC):
**C01B 7/24** (2006.01)

(52) Cooperative Patent Classification (CPC):
**C01B 7/24**

(86) International application number:
**PCT/JP2023/030866**

(87) International publication number:
**WO 2024/048486 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022 JP 2022136026**

(71) Applicant: **Resonac Corporation
Tokyo 105-7325 (JP)**

(72) Inventors:
• **IWASAKI, Jumpei
Tokyo 105-8518 (JP)**
• **YAMAGAMI, Motoya
Tokyo 105-8518 (JP)**

(74) Representative: **Strehl & Partner mbB
Maximilianstrasse 54
80538 München (DE)**

(54) **METHOD FOR PRODUCING IODINE HEPTAFLUORIDE**

(57) There is provided a method for producing iodine heptafluoride in which iodine heptafluoride having a low content of iodine gas can be produced with high yield. The method for producing iodine heptafluoride includes: a preparation step of preparing a liquid mixture containing iodine pentafluoride and hydrogen fluoride in which a content of the hydrogen fluoride is 0.1% by mass or more and 20% by mass or less with respect to a content of the iodine pentafluoride; a vaporization step of obtaining raw material mixed gas containing iodine pentafluoride gas, hydrogen fluoride gas, and fluorine gas by mixing fluorine gas with the liquid mixture to vaporize the liquid mixture; and a reaction step of producing iodine heptafluoride by causing the raw material mixed gas to react in a presence of a catalyst.

FIG. 1

EP 4 582 371 A1

**Description**

Technical Field

The present invention relates to a method for producing iodine heptafluoride.

Background Art

In a semiconductor manufacturing process, a silicon nitride film may be etched by dry etching using etching gas. As etching gas having a relatively low global warming potential and high reactivity to silicon, iodine heptafluoride ($IF_7$) is known.

In general, iodine heptafluoride is produced by causing iodine gas ($I_2$) or iodine pentafluoride ($IF_5$) and fluorine gas ($F_2$) to react with each other. For example, PTL 1 discloses a method of obtaining iodine heptafluoride by causing iodine gas and fluorine gas to react with each other. In addition, PTL 2 discloses a method of obtaining iodine heptafluoride by causing iodine pentafluoride gas and fluorine gas to react with each other.

Citation List

Patent Literatures

PTL 1: JP 6372340 B
PTL 2: JP 6252214 B

Summary of Invention

Technical Problem

However, in the method for producing iodine heptafluoride disclosed in PTL 1, iodine gas that is a raw material may be mixed as an impurity in iodine heptafluoride. When iodine gas is mixed in etching gas, the etching rate or etching selectivity of the silicon nitride film may decrease. Therefore, it is not preferable to use iodine gas as a raw material for producing iodine heptafluoride.

In addition, in the method for producing iodine heptafluoride disclosed in PTL 2, nickel (II) fluoride ($NiF_2$), cobalt (II) fluoride ($CoF_2$), or iron (III) fluoride ($FeF_3$) is used as a catalyst. When a catalyst other than the above-described catalysts is used, the yield of iodine heptafluoride may be low.

An object of the present invention is to provide a method for producing iodine heptafluoride in which iodine heptafluoride having a low content of iodine gas can be produced with high yield.

Solution to Problem

To solve the above objects, one aspect of the present invention is as the following [1] to [9].

[1] A method for producing iodine heptafluoride, the method including:

a preparation step of preparing a liquid mixture containing iodine pentafluoride and hydrogen fluoride in which a content of the hydrogen fluoride is 0.1% by mass or more and 20% by mass or less with respect to a content of the iodine pentafluoride;
a vaporization step of obtaining raw material mixed gas containing iodine pentafluoride gas, hydrogen fluoride gas, and fluorine gas by mixing fluorine gas with the liquid mixture to vaporize the liquid mixture; and
a reaction step of producing iodine heptafluoride by causing the raw material mixed gas to react in a presence of a catalyst.

[2] The method for producing iodine heptafluoride according to [1], in which the preparation step is a step of obtaining the liquid mixture by mixing hydrogen fluoride and liquid iodine pentafluoride.
[3] The method for producing iodine heptafluoride according to [1] or [2], in which the vaporization step is a step of obtaining the raw material mixed gas by blowing fluorine gas to the liquid mixture to vaporize the liquid mixture.
[4] The method for producing iodine heptafluoride according to [1] or [2], in which the vaporization step is a step of obtaining raw material mixed gas containing iodine pentafluoride gas, hydrogen fluoride gas, fluorine gas, and dilution gas by blowing fluorine gas and the dilution gas to the liquid mixture to vaporize the liquid mixture, and the dilution gas is at least one of nitrogen gas, argon, and helium.

[5] The method for producing iodine heptafluoride according to any one of [1] to [4], in which the catalyst contains at least one among metals belonging to period 3 elements or period 4 elements of a periodic table and belonging to any group of group 3 elements to group 13 elements.

[6] The method for producing iodine heptafluoride according to any one of [1] to [5], in which the vaporization step is a step of vaporizing the liquid mixture by mixing fluorine gas with the liquid mixture at a temperature of 10°C or higher and 80°C or lower.

[7] The method for producing iodine heptafluoride according to any one of [1] to [6], in which a ratio $[F_2]/[IF_5]$ of a molar amount $[F_2]$ of the fluorine gas to a molar amount $[IF_5]$ of the iodine pentafluoride in the raw material mixed gas produced in the vaporization step is 1.0 or more and 30 or less.

[8] The method for producing iodine heptafluoride according to [1] to [7], in which a reaction temperature in the reaction step is 150°C or higher and 380°C or lower.

[9] The method for producing iodine heptafluoride according to any one of [1] to [8], in which a reaction time in the reaction step is 10 seconds or longer and 100 seconds or shorter.

Advantageous Effects of Invention

According to the present invention, iodine heptafluoride having a low content of iodine gas can be produced with high yield.

Brief Description of Drawings

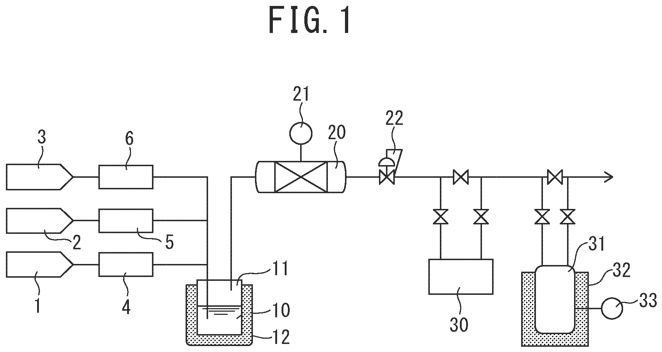

FIG. 1 is a schematic view of an iodine heptafluoride production device illustrating a method for producing iodine heptafluoride according to one embodiment of the present invention.

Description of Embodiments

Embodiments of the present invention will now be described. The embodiments are merely examples of the present invention, and the present invention is not limited to the embodiments. Various modifications or improvements can be made in the embodiments, and such modifications and improvements can be encompassed by the present invention. For example, materials, dimensions, and the like described in the embodiments are merely examples, and the present invention is not limited thereto. Within a range where the effect of the present invention is exhibited, appropriate modifications can be made.

A method for producing iodine heptafluoride according to the present embodiment includes a preparation step, a vaporization step, and a reaction step. The preparation step is a step of preparing a liquid mixture containing iodine pentafluoride and hydrogen fluoride. In this liquid mixture, a content of the hydrogen fluoride is 0.1% by mass or more and 20% by mass or less with respect to a content of the iodine pentafluoride.

The vaporization step is a step of obtaining raw material mixed gas containing iodine pentafluoride gas, hydrogen fluoride gas, and fluorine gas by mixing fluorine gas with the liquid mixture to vaporize the liquid mixture.

The reaction step is a step of producing iodine heptafluoride by causing the raw material mixed gas to react in the presence of a catalyst.

In the method for producing iodine heptafluoride according to the present embodiment, the raw material does not contain iodine gas. Therefore, iodine heptafluoride having a low content of iodine gas can be produced. Accordingly, the iodine heptafluoride produced using the method for producing iodine heptafluoride according to the present embodiment is suitable as etching gas for dry etching, for example, a silicon nitride film and can be used for a semiconductor manufacturing process.

In addition, in the method for producing iodine heptafluoride according to the present embodiment, not only when nickel (II) fluoride, cobalt (II) fluoride, or iron (III) fluoride is used as a catalyst but also when catalysts of other kinds are used, iodine heptafluoride can be produced with high yield.

Hereinafter, the method for producing iodine heptafluoride according to the present embodiment will be described in more detail.

[1] Reaction of Producing Iodine Heptafluoride

In the method for producing iodine heptafluoride according to the present embodiment, iodine pentafluoride and fluorine gas as raw material compounds react with each other according to the following chemical reaction formula (1) to produce iodine heptafluoride that is a target reaction product.

$$IF_5 + F_2 \rightarrow IF_7 \quad \cdots \quad (1)$$

[2] Preparation Step

In the method for producing iodine heptafluoride according to the present embodiment, the preparation step is a step of preparing a liquid mixture containing iodine pentafluoride and hydrogen fluoride in which a content of the hydrogen fluoride is 0.1% by mass or more and 20% by mass or less with respect to a content of the iodine pentafluoride. The method of preparing the liquid mixture is not particularly limited. For example, hydrogen fluoride and liquid iodine pentafluoride may be mixed to obtain a liquid mixture, or liquid iodine pentafluoride containing hydrogen fluoride as an impurity may be used as a liquid mixture.

The method of mixing hydrogen fluoride and liquid iodine pentafluoride to obtain a liquid mixture is not particularly limited, and examples thereof include a method of blowing hydrogen fluoride gas to liquid iodine pentafluoride in a container (for example, a vaporizer).

As long as the ratio between the content of iodine pentafluoride and the content of hydrogen fluoride satisfies the above-described condition, the liquid mixture may be a mixture consisting of two components of iodine pentafluoride and hydrogen fluoride, or may be a mixture consisting of three or more components that further contains another component other than iodine pentafluoride and hydrogen fluoride. Examples of the other component other than iodine pentafluoride and hydrogen fluoride include dilution gas and fluorine gas described below in detail.

[3] Ratio between Content of Iodine Pentafluoride and Content of Hydrogen Fluoride

The liquid mixture contains iodine pentafluoride and hydrogen fluoride, and the content of hydrogen fluoride with respect to the content of iodine pentafluoride needs to be 0.1% by mass or more and 20% by mass or less, preferably 0.5% by mass or more and 15% by mass or less, and more preferably 1% by mass or more and 10% by mass or less.

When the ratio between the content of iodine pentafluoride and the content of hydrogen fluoride is in the above-described numerical range, the activity of the catalyst used in the reaction step increases. Therefore, the reaction of producing iodine heptafluoride is likely to progress more efficiently. In addition, when the ratio between the content of iodine pentafluoride and the content of hydrogen fluoride is in the above-described numerical range, deterioration of the catalyst is not likely to occur, and corrosion is not likely to occur in a device (for example, a vaporizer, a pipe, or a reactor) used for producing iodine heptafluoride.

[4] Vaporization Step

The vaporization step is a step of obtaining raw material mixed gas containing iodine pentafluoride gas, hydrogen fluoride gas, and fluorine gas by mixing fluorine gas with the liquid mixture to vaporize the liquid mixture. The method of mixing fluorine gas with the liquid mixture is not particularly limited, and examples thereof include a method of mixing fluorine gas with the liquid mixture by blowing the fluorine gas to the liquid mixture. By blowing fluorine gas to the liquid mixture, the fluorine gas is mixed with the liquid mixture, and the liquid mixture is vaporized. As a result, raw material mixed gas containing iodine pentafluoride gas, hydrogen fluoride gas, and fluorine gas is obtained.

In addition, in the vaporization step, fluorine gas and dilution gas may be mixed with the liquid mixture by blowing the fluorine gas and the dilution gas to the liquid mixture. By blowing fluorine gas and dilution gas to the liquid mixture, the fluorine gas and the dilution gas are mixed with the liquid mixture, and the liquid mixture is vaporized. As a result, raw material mixed gas containing iodine pentafluoride gas, hydrogen fluoride gas, fluorine gas, and dilution gas is obtained.

When the fluorine gas and the dilution gas are blown to the liquid mixture, the fluorine gas diluted with the dilution gas may be blown to the liquid mixture, or the fluorine gas and the dilution gas may be blown to the liquid mixture separately and simultaneously.

In the preparation step, hydrogen fluoride and liquid iodine pentafluoride are mixed to obtain a liquid mixture. A part or the entirety of the hydrogen fluoride to be mixed with the liquid iodine pentafluoride in the preparation step may be mixed with the liquid mixture together with the fluorine gas (or the fluorine gas and the dilution gas) in the vaporization step.

For example, when the entirety of the hydrogen fluoride to be mixed with the liquid iodine pentafluoride in the preparation step is mixed with the liquid mixture in the vaporization step, in the preparation step, only the liquid iodine pentafluoride is prepared without mixing hydrogen fluoride gas with the liquid iodine pentafluoride, and in the vaporization step, hydrogen fluoride gas and fluorine gas (or hydrogen fluoride gas, fluorine gas, and dilution gas) are mixed with the liquid iodine pentafluoride to obtain raw material mixed gas.

In addition, when a part of the hydrogen fluoride to be mixed with the liquid iodine pentafluoride in the preparation step is mixed with the liquid mixture in the vaporization step, in the preparation step, the remaining part of the hydrogen fluoride and liquid iodine pentafluoride are mixed to obtain a liquid mixture, and in the vaporization step, a part of hydrogen fluoride gas and fluorine gas (or a part of hydrogen fluoride gas, fluorine gas, and dilution gas) are mixed with the liquid mixture to obtain raw material mixed gas.

In the method for producing iodine heptafluoride according to the present embodiment, the method of supplying the fluorine gas or the fluorine gas diluted with the dilution gas to a container accommodating the liquid mixture is not particularly limited, and examples thereof include the following method.

That is, a method of connecting a gas supply mechanism to a container where the fluorine gas is compressed and filled or a container where the fluorine gas diluted with the dilution gas is compressed and filled such that the fluorine gas or the fluorine gas diluted with the dilution gas is supplied to the container accommodating the liquid mixture while controlling the flow rate of the gas supply mechanism can be used. The temperature of the fluorine gas or the fluorine gas diluted with the dilution gas during the supply to the container accommodating the liquid mixture is not particularly limited as long as it is a temperature at which the gas supply mechanism is operable.

The above-described gas supply mechanism is not particularly limited as long as it includes a mechanism capable of controlling the flow rate of gas. From the viewpoint of easy availability, it is preferable that a mass flow controller, a flow meter, or the like is used. Hereinafter, an aspect where a mass flow controller is used as an example of the gas supply mechanism will be described.

In the method for producing iodine heptafluoride according to the present embodiment, the method of supplying the raw material mixed gas to the reactor that performs the reaction of producing iodine heptafluoride is not particularly limited, and examples thereof include a method of heating and vaporizing the liquid mixture (iodine pentafluoride) in the vaporizer to which the mass flow controller is connected to produce raw material mixed gas and supplying the raw material mixed gas to the reactor while controlling the flow rate with the mass flow controller.

Alternatively, a method of vaporizing the liquid mixture using the fluorine gas or the fluorine gas diluted with the dilution gas can also be used. That is, the mass flow controller is connected to the container in which the fluorine gas or the fluorine gas diluted with the dilution gas is compressed and filled, the fluorine gas or the fluorine gas diluted with the dilution gas is supplied to the vaporizer accommodating the liquid mixture while controlling the flow rate with the mass flow controller, the liquid mixture is vaporized in the vaporizer, and the raw material mixed gas of which the flow rate is controlled is supplied to the reactor.

At this time, the fluorine gas or the fluorine gas diluted with the dilution gas may be blown to the liquid mixture (liquid phase) or may be supplied to a gas phase portion in the vaporizer. By blowing the fluorine gas or the fluorine gas diluted with the dilution gas to the liquid mixture, the liquid mixture can be efficiently vaporized even at a temperature of a boiling point or lower of iodine pentafluoride.

Although described below in detail, to vaporize iodine pentafluoride, typically, it is necessary to increase the temperature to a temperature close to the boiling point (97°C) of iodine pentafluoride. Note that there is a concern that iodine pentafluoride may be excessively vaporized at a high temperature such that the purity of iodine heptafluoride decreases. When the iodine heptafluoride having a low purity is used as etching gas, there is a problem in that the etching selectivity decreases. In addition, when the container accommodating iodine pentafluoride is at a high temperature, corrosion progresses in the container. Therefore, it is not preferable to increase the temperature to a temperature close to the boiling point of the iodine pentafluoride. Further, since the vapor pressure is low at 10°C or lower, there is a concern that a required amount of iodine pentafluoride gas for the reaction cannot be obtained.

However, by blowing the fluorine gas or the fluorine gas diluted with the dilution gas to the liquid mixture in the vaporization step, the liquid mixture can be efficiently vaporized even at the temperature of the boiling point or lower of iodine pentafluoride. Accordingly, by blowing the fluorine gas or the fluorine gas diluted with the dilution gas to the liquid mixture, the occurrence of each of the above-described problems can be suppressed.

[5] Vaporization Temperature

The temperature at which the fluorine gas or the fluorine gas diluted with the dilution gas is mixed with the liquid mixture to vaporize the liquid mixture in the vaporization step (hereinafter also referred to as "the vaporization temperature") is preferably 10°C or higher and 80°C or lower, more preferably 20°C or higher and 70°C or lower, and still more preferably 30°C or higher and 60°C or lower.

For example, the temperature in the vaporizer at which the liquid mixture is vaporized and supplied to the reactor can be appropriately changed depending on the supply rate of the raw material mixed gas to the reactor. Therefore, it is preferable that the temperature in the vaporizer is controlled to be in the above-described numerical range by controlling the supply rate of the raw material mixed gas to the reactor.

When the temperature in the vaporizer is in the above-described temperature range, the vapor pressure of iodine pentafluoride is sufficiently high even at the temperature of the boiling point or lower of iodine pentafluoride. Therefore, the productivity of iodine heptafluoride is excellent, and corrosion caused by iodine pentafluoride is not likely to occur in a device (for example, a vaporizer, a pipe, or a reactor) used for producing iodine heptafluoride.

[6] Molar Ratio of Fluorine Gas to Iodine Pentafluoride

In the method for producing iodine heptafluoride according to the present embodiment, to efficiently produce high-purity iodine heptafluoride, a ratio $[F_2]/[IF_5]$ of a molar amount $[F_2]$ of the fluorine gas to a molar amount $[IF_5]$ of the iodine pentafluoride in the raw material mixed gas produced in the vaporization step is preferably 1.0 or more and 30 or less, more preferably 5 or more and 25 or less, and still more preferably 10 or more and 15 or less. When the ratio $[F_2]/[IF_5]$ is in the above-described numerical range, the remaining of unreacted iodine pentafluoride and fluorine gas can be suppressed.

[7] Dilution Gas

In the vaporization step of the method for producing iodine heptafluoride according to the present embodiment, as described above, the fluorine gas and the dilution gas may be mixed with the liquid mixture to vaporize the liquid mixture. Accordingly, in the reaction step of the method for producing iodine heptafluoride according to the present embodiment, the reaction of iodine pentafluoride and fluorine gas may be performed in a state where the fluorine gas is diluted with the dilution gas.

In the reaction step of the method for producing iodine heptafluoride according to the present embodiment, by performing the reaction in a state where the fluorine gas is mixed with the dilution gas to be diluted, local excessive heat generation is suppressed, and the reaction is easily controlled. Therefore, runaway of the reaction or corrosion of the reactor can be suppressed.

The kind of the dilution gas is not particularly limited as long as it is inert gas. For example, at least one of nitrogen gas ($N_2$), argon (Ar), and helium (He) can be used. Among these inert gases, nitrogen gas is preferable from the viewpoints of easy availability and low cost.

The amount of the dilution gas used is not particularly limited, and is preferably 30% by volume or more, more preferably 50% by volume or more, and still more preferably 70% by volume or more with respect to the total volume of the fluorine gas and the dilution gas in the reactor. By controlling the amount of the dilution gas used to be in the above-described numerical range, the risk of the local reaction or the runaway reaction can be sufficiently reduced, and iodine heptafluoride can be more safely produced.

[8] Reaction Temperature

In the reaction step of the method for producing iodine heptafluoride according to the present embodiment, the temperature at which the reaction of iodine pentafluoride and fluorine gas is performed (hereinafter, also referred to as "the reaction temperature") is preferably 150°C or higher and 380°C or lower, more preferably 180°C or higher and 350°C or lower, and still more preferably 210°C or higher and 320°C or lower.

When the reaction temperature is in the above-described temperature range, the reaction of iodine pentafluoride and fluorine gas is likely to progress smoothly. In addition, when the reaction temperature is in the above-described temperature range, corrosion caused by the compound (fluorine gas, iodine pentafluoride, or hydrogen fluoride) in the raw material mixed gas or iodine heptafluoride is not likely to occur in the reactor. Therefore, as the material of the reactor, an expensive material such as platinum does not need to be used. Further, when the reaction temperature is in the above-described temperature range, the reverse reaction of the chemical reaction formula (1) is not likely to progress, and thus the decomposition of iodine heptafluoride that is a target reaction product is not likely to occur during the reaction.

The method of performing the reaction of iodine pentafluoride and fluorine gas at a temperature in the above-described temperature range is not particularly limited, and examples thereof include a method of supplying the raw material mixed gas into the reactor in a state where the temperature in the reactor is adjusted to a temperature in the above-described temperature range.

The method of adjusting the temperature in the reactor to a temperature in the above-described temperature range is not particularly limited, and examples thereof include a method of adjusting the temperature in the reactor by heating the reactor using heating means such as an electrical heater or a vapor or by cooling the reactor in a jacket into which a refrigerant flows in some cases.

When the reaction of iodine pentafluoride and fluorine gas is performed in a state where a catalyst is disposed in the reactor, the reactor may be heated to adjust the reactor and the catalyst to be at a desired temperature in a state where the catalyst is disposed in the reactor, and subsequently the raw material mixed gas may be supplied into the reactor. When the temperature of the catalyst is high in the above-described temperature range, the yield of iodine heptafluoride is improved.

[9] Reaction Time

In the reaction step of the method for producing iodine heptafluoride according to the present embodiment, the time at which the reaction of iodine pentafluoride and fluorine gas is performed (hereinafter, also referred to as "the reaction time") is not particularly limited and can be appropriately set in consideration of the yield or productivity of iodine heptafluoride. The reaction time is preferably 10 seconds or longer and 100 seconds or shorter, more preferably 20 seconds or longer and 90 seconds or shorter, and still more preferably 30 seconds or longer and 80 seconds or shorter.

When the reaction step is performed by flowing the raw material mixed gas in the reactor filled with the catalyst, a period of time in which the raw material mixed gas supplied to the reactor flows into the reactor and is exhausted from the reactor, that is, a period of time in which the raw material mixed gas remains in the reactor can be considered the reaction time. Accordingly, hereinafter, the reaction time will also be referred to as "retention time". The retention time is defined as the inverse of a space velocity (SV) (= the supply rate of the raw material mixed gas into the reactor/the volume of the reactor).

As long as the reverse reaction where iodine heptafluoride is decomposed into iodine pentafluoride and fluorine gas is not significant at the reaction temperature, as the retention time increases, the yield of iodine heptafluoride is improved. Note that, as the retention time increases, the volume of the reactor needs to be increased. In addition, it is preferable that the retention time is short in consideration of the productivity of iodine heptafluoride. In consideration of these factors, it is preferable that the retention time is in the above-described numerical range.

[10] Catalyst

In the reaction step of the method for producing iodine heptafluoride according to the present embodiment, a catalyst that causes the reaction of producing iodine heptafluoride from iodine pentafluoride and fluorine gas to smoothly progress is used. To control the reaction of producing iodine heptafluoride, the reaction of iodine pentafluoride and fluorine gas may be performed in the reactor where the catalyst is disposed.

It is preferable that the catalyst has low reactivity with iodine pentafluoride, hydrogen fluoride, fluorine gas, and iodine heptafluoride. It is preferable that a material used as the catalyst contains at least one among metals belonging to period 3 elements or period 4 elements of the periodic table and belonging to any group of group 3 elements to group 13 elements (that is, aluminum (Al), scandium (Sc), titanium (Ti), vanadium (V), chromium (Cr), manganese (Mn), iron (Fe), cobalt (Co), nickel (Ni), copper (Cu), zinc (Zn), and gallium (Ga)).

The metal may be used alone, as an alloy thereof, or as a compound of the metal. Examples of the compound of the metal include an oxide and a fluoride. The catalyst may be used alone or in combination of two or more kinds thereof.

Specific examples of the catalyst will be described below. Examples of the elemental metal include aluminum, scandium, iron, cobalt, and nickel. Examples of the metal oxide include aluminum oxide ($Al_2O_3$ such as $\alpha$-$Al_2O_3$), scandium (III) oxide ($Sc_2O_3$), vanadium oxide (VO, $V_2O_3$, $V_2O_5$), chromium oxide (CrO, $Cr_2O_3$, $CrO_2$, $CrO_3$), iron oxide (FeO, $Fe_2O_3$, $Fe_3O_4$), cobalt (II) oxide (CoO), and nickel (II) oxide (NiO).

Examples of the metal fluoride include aluminum fluoride ($AlF_3$), scandium (III) fluoride ($ScF_3$), vanadium (III) fluoride ($VF_3$), chromium (III) fluoride ($CrF_3$), iron fluoride ($FeF_2$, $FeF_3$), cobalt fluoride ($CoF_2$, $CoF_3$), and nickel (II) fluoride ($NiF_2$). In consideration of low reactivity with iodine pentafluoride, hydrogen fluoride, fluorine gas, and iodine heptafluoride and easy availability, $Al_2O_3$, $AlF_3$, $FeF_3$, $CoF_2$, or $NiF_2$ is more preferable.

The shape of the catalyst is not particularly limited as long as fluorine gas and iodine pentafluoride gas flowing in the reactor can efficiently come into contact with the catalyst and are not blocked in the reactor.

In a specific example, a material that causes fluorine gas, hydrogen fluoride gas, iodine pentafluoride gas, or iodine heptafluoride gas to come into contact with a metal porous body or a metal mesh at a high temperature such that the metal surface is fluorinated to produce a metal fluoride can be used as the catalyst. Alternatively, a pellet into which powder of a commercially available metal fluoride or metal oxide is molded or a molded product of a commercially available metal fluoride or metal oxide can be used as it is.

Note that, from the viewpoint that the contact area of the gas and the metal surface per unit volume is large and the reaction of producing iodine heptafluoride efficiently progresses, the shape of the catalyst is preferably a porous body, a mesh, or the like. In particular, from the viewpoint of easy availability, a porous body having a pore diameter of 0.3 mm or more and 3.2 mm or less and a specific area of 500 $m^2/m^3$ or more and 10000 $m^2/m^3$ or less or a mesh having a wire diameter of 0.04 mm or more and 0.8 mm or less and an aperture of 0.04 mm or more and 0.98 mm or less is more preferable.

In addition, the amount of the catalyst used varies depending on the shape of the catalyst and is preferably an amount where the space filling factor in the reactor is 30% or more and 80% or less, more preferably an amount where the space filling factor in the reactor is 40% or more and 70% or less, and still more preferably an amount where the space filling factor in the reactor is 50% or more and 60% or less.

The amount of the catalyst used can be represented by the mass of the catalyst used per the mass of iodine heptafluoride produced per unit time. In this case, the amount of the catalyst used is preferably 0.14 or more and 1.40 or less, more preferably 0.16 or more and 0.71 or less, and still more preferably 0.18 or more and 0.47 or less.

[11] Structure of Reactor

The reactor that can be used in the method for producing iodine heptafluoride according to the present embodiment is not particularly limited as long as it has a structure where iodine pentafluoride gas and fluorine gas can come into contact with the catalyst, and a flow reactor is preferable. In addition, the shape of the reactor may be a tube type or a tank type, the tube type may be a simple tube type or a multiple tube type, and the catalyst filling form may be a fluidized bed or a fixed bed. The shape of the reactor is preferably a simple tube type or a multiple tube type, and the catalyst filling form is preferably a fixed bed.

When the flow reactor is used, iodine pentafluoride gas and fluorine gas need to be simultaneously supplied into the flow reactor.

Note that, in the method for producing iodine heptafluoride according to the present embodiment, in consideration that iodine heptafluoride can be continuously obtained, it is preferable that a flow tube type reactor is used as the reactor. The shape of the flow tube type reactor is not particularly limited as long as iodine pentafluoride gas, fluorine gas, or the like can flow. When the catalyst is disposed in the reactor, it is preferable that the reactor has a cavity such that the catalyst can be accommodated and the gas can flow in a state where the catalyst is accommodated.

[12] Material of Reactor

The reactor that can be used in the method for producing iodine heptafluoride according to the present embodiment needs to be formed of a material having corrosion resistance to fluorine gas, hydrogen fluoride, and iodine pentafluoride. Specifically, a metal such as nickel, a nickel-based alloy, aluminum, stainless steel, or platinum or a ceramic such as alumina can be used. Specific examples of the nickel-based alloy include Inconel (registered trademark), Hastelloy (registered trademark), and Monel (registered trademark).

When the temperature in the reactor is 150°C or higher, it is preferable to select nickel, the nickel-based alloy, platinum, or alumina having particularly excellent corrosion resistance among the above-described materials, and nickel or a nickel-based alloy that is easily available and relatively inexpensive is more preferable. The metal oxide or the metal fluoride that can be used as the catalyst can also be used as a material of the reactor.

As the reactor that can be used in the method for producing iodine heptafluoride according to the present embodiment, a bright annealing tube formed of nickel is preferably used. Nickel has excellent corrosion resistance to fluorine gas, hydrogen fluoride, iodine pentafluoride, and iodine heptafluoride at a high temperature used in the method for producing iodine heptafluoride according to the present embodiment, and the bright annealing tube has a smooth surface. Therefore, the risk of an abnormal reaction of the above-described gas and a metal residue or damage to the reactor can be minimized.

When the method for producing iodine heptafluoride according to the present embodiment is performed using the nickel reactor, the inner surface of the reactor may be fluorinated by fluorine gas, hydrogen fluoride, iodine pentafluoride, and iodine heptafluoride and may be changed into $NiF_2$. However, as can be seen from the fact that $NiF_2$ can be used as the catalyst in the method for producing iodine heptafluoride according to the present embodiment, the inner surface of the reactor may be changed into $NiF_2$. Likewise, even when the material of the reactor is the above-described metal, the inner surface of the reactor may also be fluorinated by the reaction of the metal and fluorine gas, hydrogen fluoride, iodine pentafluoride, and iodine heptafluoride.

As the material of the bright annealing tube, not only nickel but also a nickel-based alloy where the content of nickel is 50% by mass or more and that contains iron, copper, chromium, molybdenum, or the like (for example, Inconel (registered trademark), Hastelloy (registered trademark), or Monel (registered trademark)) or $NiF_2$ can be used.

[13] Cooling and Collecting Container

In the method for producing iodine heptafluoride according to the present embodiment, gas containing iodine heptafluoride (hereinafter, also referred to as "reaction mixture gas") can be obtained by the reaction step. Therefore, by cooling the reaction mixture gas, iodine heptafluoride can be collected. To cool the reaction mixture gas, for example, a cooling and collecting container can be used.

When the reaction mixture gas obtained in the reaction step is supplied to the cooling and collecting container and is cooled at a temperature at which iodine pentafluoride is liquefied and iodine heptafluoride is not solidified and liquefied, iodine pentafluoride and iodine heptafluoride can be separated. For example, when the reaction mixture gas is cooled to 10°C, most of iodine pentafluoride is liquefied and is collected in the cooling and collecting container (hereinafter, also referred to as "the cooling and collecting container for collecting iodine pentafluoride"). However, most of iodine heptafluoride passes through the cooling and collecting container as gas without any change.

A part of iodine heptafluoride may be solidified or dissolved in iodine pentafluoride to be collected in the cooling and collecting container for collecting iodine pentafluoride. However, most of iodine heptafluoride is likely to pass as gas through the cooling and collecting container for collecting iodine pentafluoride.

The cooling temperature of the reaction mixture gas in the cooling and collecting container is preferably in a range of -80°C or higher and 0°C or lower, more preferably in a range of -70°C or higher and -10°C or lower, and still more preferably in a range of -60°C or higher and -20°C or lower. In this temperature range, iodine pentafluoride can be collected with high efficiency, and the amount of iodine heptafluoride collected is small. Therefore, the separation efficiency of iodine pentafluoride and iodine heptafluoride is high.

When iodine pentafluoride is collected at a temperature of lower than or equal to 9.4°C that is the melting point of iodine pentafluoride, there is a concern that iodine pentafluoride may be solidified in a pipe connected to the cooling and collecting container to block the pipe. However, as long as the dilution gas is used in the reaction step and is accompanied by the reaction mixture gas, the blockage of the pipe caused by the solidification of iodine pentafluoride can be suppressed.

The internal pressure of the cooling and collecting container for collecting iodine pentafluoride is preferably 0.05 MPa or more and 0.5 MPa or less, more preferably 0.1 MPa or more and 0.3 MPa or less. Unless otherwise specified, the pressure in the present invention refers to an absolute pressure.

When the iodine heptafluoride passed through the cooling and collecting container for collecting iodine pentafluoride is supplied to another cooling and collecting container (hereinafter, also referred to as "cooling and collecting container for collecting iodine heptafluoride") and is cooled at a temperature at which iodine heptafluoride is solidified or liquefied, the iodine heptafluoride can be collected in the other cooling and collecting container. The cooling temperature in the cooling and collecting container for collecting iodine heptafluoride is not particularly limited as long as it is a temperature lower than the boiling point of iodine heptafluoride. Note that, to improve the collection efficiency of iodine heptafluoride, it is preferable that the iodine heptafluoride is cooled at a temperature at which the vapor pressure of iodine heptafluoride is sufficiently low. Specifically, the cooling temperature in the cooling and collecting container for collecting iodine heptafluoride is preferably in a range of -100°C or higher and 0°C or lower and more preferably in a range of -80°C or higher and -20°C or lower.

When iodine heptafluoride is collected at a temperature of a melting point or lower of iodine heptafluoride, there is a concern that iodine heptafluoride may be solidified in a pipe connected to the cooling and collecting container for collecting iodine heptafluoride to block the pipe. However, as long as the dilution gas is used in the reaction step and is accompanied by the reaction mixture gas, the blockage of the pipe caused by the solidification of iodine heptafluoride can be suppressed. The internal pressure of the cooling and collecting container for collecting iodine heptafluoride is preferably 0.05 MPa or more and 0.5 MPa or less, more preferably 0.1 MPa or more and 0.3 MPa or less.

The cooling and collecting container for collecting iodine pentafluoride and the cooling and collecting container for collecting iodine heptafluoride need to be formed of a material that is not likely to react with and has corrosion resistance to fluorine gas, hydrogen fluoride, iodine pentafluoride, and iodine heptafluoride. Specifically, a metal such as nickel, a nickel-based alloy, aluminum, stainless steel, or platinum or a ceramic such as alumina can be used.

Specific examples of the nickel-based alloy include Inconel (registered trademark), Hastelloy (registered trademark), and Monel (registered trademark). In addition, an inner surface in contact with the fluorine gas and the like on the surface of the cooling and collecting container formed of the above-described metal may be fluorinated. Among these, aluminum, alumina, or stainless steel that is easily available and is relatively inexpensive is more preferable.

In addition, the volumes and the numbers of the cooling and collecting container for collecting iodine pentafluoride and the cooling and collecting container for collecting iodine heptafluoride are not particularly limited and can be freely set according to the amounts of iodine pentafluoride and iodine heptafluoride collected. When a plurality of cooling and collecting containers are provided, the cooling and collecting containers may be connected in series or in parallel. Hereinafter, an example where one cooling and collecting container is provided will be described.


[14] Example of Iodine Heptafluoride Production Device

The method for producing iodine heptafluoride according to the present embodiment can be performed using an iodine heptafluoride production device illustrated in FIG. 1. The iodine heptafluoride production device illustrated in FIG. 1 includes: a vaporizer 11 that accommodates liquid iodine pentafluoride or the liquid mixture and vaporizes the liquid mixture to produce the raw material mixed gas; a reactor 20 that performs the reaction of iodine pentafluoride and fluorine gas in the raw material mixed gas fed from the vaporizer 11; a fluorine gas supply device 1 that supplies fluorine gas to the vaporizer 11; a mass flow controller 4 that controls the flow rate of the fluorine gas supplied from the fluorine gas supply device 1 to the vaporizer 11; a hydrogen fluoride supply device 2 that supplies hydrogen fluoride gas to the vaporizer 11; a mass flow controller 5 that controls the flow rate of the hydrogen fluoride gas supplied from the hydrogen fluoride supply device 2 to the vaporizer 11; a dilution gas supply device 3 that supplies inert gas to the vaporizer 11; a mass flow controller 6 that controls the flow rate of the inert gas supplied from the dilution gas supply device 3 to the vaporizer 11; and a heating device 12 that heats the content in the vaporizer 11.

In the reactor 20, the metal (not illustrated) that is the catalyst is disposed. In addition, the reactor 20 includes a heating device (not illustrated) such as an electric furnace and can control the temperature in the reactor 20 to any temperature. Further, the reactor 20 includes a pressure gauge 21 that measures a pressure in the reactor 20.

In addition, the iodine heptafluoride production device illustrated in FIG. 1 further includes a cooling and collecting container 31 (corresponding to the above-described "cooling and collecting container for collecting iodine pentafluoride") that separates iodine heptafluoride and iodine pentafluoride by cooling the reaction mixture gas containing iodine pentafluoride and iodine heptafluoride, collecting iodine pentafluoride, and allowing iodine heptafluoride to pass therethrough. The cooling and collecting container 31 includes a cooling device 32, and the temperature in the cooling and collecting container 31 can be controlled by the cooling device 32. In addition, the cooling and collecting container 31 includes a thermometer 33 that measures the temperature in the cooling and collecting container 31.

The cooling and collecting container 31 is connected to the reactor 20 through a pipe. In the pipe to which the reactor 20 and the cooling and collecting container 31 are connected, a pressure regulation valve 22 and a Fourier transform infrared spectrophotometer 30 are provided, and the pressure regulation valve 22 and the Fourier transform infrared spectrophotometer 30 are arranged in series in this order from the reactor 20 side.

Next, an example of a method for producing iodine heptafluoride using the iodine heptafluoride production device illustrated in FIG. 1 will be described.

The vaporizer 11 accommodates liquid iodine pentafluoride 10 and blows hydrogen fluoride gas to the liquid iodine pentafluoride 10 from the hydrogen fluoride supply device 2. By supplying the hydrogen fluoride gas while controlling the flow rate with the mass flow controller 5, the concentration of hydrogen fluoride in the iodine pentafluoride 10 is controlled.

At this time, the liquid iodine pentafluoride 10 in the vaporizer 11 can be heated by the heating device 12 to increase the amount of the iodine pentafluoride 10 vaporized. As a result, the liquid iodine pentafluoride 10 and iodine pentafluoride gas are present in the vaporizer 11.

The fluorine gas can be supplied from the fluorine gas supply device 1 to the liquid iodine pentafluoride 10 in the vaporizer 11 while controlling the flow rate with the mass flow controller 4, and the inert gas can be supplied from the dilution gas supply device 3 to the liquid iodine pentafluoride 10 while controlling the flow rate with the mass flow controller 6. At this time, the concentration of the fluorine gas in the gas supplied to the liquid iodine pentafluoride 10 in the vaporizer 11 can be controlled by the mass flow controllers 4 and 6.

That is, when only the fluorine gas is supplied without supplying the inert gas, the fluorine gas having a concentration of 100% can be supplied to the liquid iodine pentafluoride 10 in the vaporizer 11. In addition, when both of the fluorine gas and the inert gas are supplied, the fluorine gas diluted to any concentration with the inert gas can be supplied to the liquid iodine pentafluoride 10 in the vaporizer 11.

Hereinafter, the fluorine gas diluted to x% by volume with the inert gas will be referred to as "x% by volume fluorine gas". For example, the fluorine gas diluted to 20% by volume with the inert gas will be referred to as "20% by volume fluorine gas", the fluorine gas diluted to 50% by volume with the inert gas will be referred to as "50% by volume fluorine gas", and the fluorine gas not diluted with the inert gas will be referred to as "100% by volume fluorine gas".

By supplying the fluorine gas to the liquid iodine pentafluoride 10 in the vaporizer 11, the liquid iodine pentafluoride 10 is vaporized to produce iodine pentafluoride gas. Therefore, raw material mixed gas containing iodine pentafluoride gas, hydrogen fluoride gas, and fluorine gas is produced. When both the fluorine gas and the inert gas are supplied to the liquid iodine pentafluoride 10 in the vaporizer 11, raw material mixed gas containing iodine pentafluoride gas, hydrogen fluoride gas, fluorine gas, and inert gas is produced. The produced raw material mixed gas is fed from the vaporizer 11 to the reactor 20 through a pipe.

In the reactor 20, the reaction of iodine pentafluoride gas and fluorine gas is performed, and iodine pentafluoride gas and fluorine gas are supplied to perform the reaction such that a ratio $[F_2]/[IF_5]$ of a molar amount $[F_2]$ of the fluorine gas to a molar amount $[IF_5]$ of the iodine pentafluoride in the raw material mixed gas is 1.0 or more and 30 or less.

During the reaction, the pressure in the reactor 20 is measured by the pressure gauge 21. When the fluorine gas is supplied to the liquid iodine pentafluoride 10 in the vaporizer 11, reaction mixture gas containing iodine heptafluoride and iodine pentafluoride is obtained as a result of the reaction. When both the fluorine gas and the inert gas are supplied to the liquid iodine pentafluoride 10 in the vaporizer 11, reaction mixture gas containing iodine heptafluoride, iodine pentafluoride, and inert gas is obtained. Note that the reaction mixture gas may contain nitrogen gas, oxygen gas, and hydrogen fluoride in addition to unreacted fluorine gas.

The obtained reaction mixture gas is fed to the Fourier transform infrared spectrophotometer 30 while adjusting the pressure to about 0.1 MPa with the pressure regulation valve 22, the concentrations of components in the reaction mixture gas are determined by Fourier transform infrared spectroscopy, and the reaction mixture gas is fed to the cooling and collecting container 31. The temperature in the cooling and collecting container 31 is controlled to a predetermined temperature by the cooling device 32. Therefore, the reaction mixture gas separated into a gas component containing iodine heptafluoride and a liquid component containing iodine pentafluoride.

Although described below in detail, most of the iodine pentafluoride in the reaction mixture gas is liquefied in the cooling and collecting container 31 and is collected in the cooling and collecting container 31. On the other hand, most of the iodine heptafluoride in the reaction mixture gas is gaseous although a part thereof is solidified or liquefied to be collected. Therefore, the gas containing the gaseous iodine heptafluoride and at least one of unreacted fluorine gas and inert gas is exhausted as exhaust gas from the cooling and collecting container 31.

The exhaust gas containing iodine heptafluoride that has passed through the cooling and collecting container 31 contains iodine heptafluoride gas, unreacted fluorine gas, and inert gas as major components, and by further purifying this exhaust gas through an operation such as distillation or adsorption, high-purity iodine heptafluoride can also be produced.

Examples

Hereinafter, the present invention will be described more specifically by describing examples and comparative examples.

[Preparation Example 1 of Catalyst]

An aluminum porous body (manufactured by Taisei Kogyo Co., Ltd.; pore diameter: 0.5 mm) was disposed in a nickel bright annealing tube (inner diameter: 25.4 mm, length: 900 mm) including an electrical heater and a pressure gauge. By heating the bright annealing tube with the electrical heater, the temperature of the aluminum porous body was adjusted to 300°C.

The nickel bright annealing tube is a bright annealing tube formed of Ni201 (nickel purity: 99.7% by mass or more) standardized with JIS H4552:2000 "Nickel and Nickel Alloy Seamless Pipes and Tubes".

Next, 50% by volume fluorine gas was introduced from one end (hereinafter, referred to as "inlet") of the bright annealing tube at a flow rate of 200 sccm and was exhausted from another end (hereinafter, referred to as "outlet") thereof. As a result, aluminum forming the aluminum porous body reacted with fluorine gas to form an $AlF_3$ porous body. At this time, the pressure in the bright annealing tube was 0.1 MPa. Here, "sccm" is a volume flow rate ($cm^3$) standardized under a condition of 0°C and 1 atm per minute.

Completion of the reaction where aluminum and fluorine gas reacted with each other to form $AlF_3$ on the aluminum surface was verified using the following method. The exhaust gas exhausted from the outlet of the bright annealing tube flowed through a potassium iodide (KI) aqueous solution having a concentration of 10% by mass for 5 minutes, and oxidation-reduction titration of the potassium iodide aqueous solution through which the exhaust gas flowed was performed using a 0.1 N sodium thiosulfate aqueous solution. In the oxidation-reduction titration, the concentration of the fluorine gas exhausted from the outlet of the bright annealing tube was determined.

When the concentration of the fluorine gas exhausted from the outlet of the bright annealing tube was the same as the concentration of the fluorine gas supplied from the inlet of the bright annealing tube, the completion of the reaction of aluminum and fluorine gas was determined. The oxidation-reduction titration was performed 3 hours after flowing the 50% by volume fluorine gas through the bright annealing tube, and the completion of the reaction was verified by the oxidation-reduction titration.

The $AlF_3$ porous body obtained as described above was used as the catalyst, and the bright annealing tube where the $AlF_3$ porous body was disposed was used as the reactor for producing iodine heptafluoride.

[Preparation Example 2 of Catalyst]

A $NiF_2$ catalyst was prepared and analyzed using the same method as that of Preparation Example 1 of the catalyst, except that the aluminum porous body was changed to a small piece (thickness: 1.6 mm, width: 5 mm, length: 5 mm) cut from a nickel plate material having a purity of 99% (manufactured by The NIlaco Corporation, thickness: 1.6 mm, width: 100 mm, length: 110 mm).

[Preparation Example 3 of Catalyst]

A $CoF_2$ catalyst was prepared and analyzed using the same method as that of Preparation Example 1 of the catalyst, except that the aluminum porous body was changed to a small piece (thickness: 0.1 mm, width: 5 mm, length: 5 mm) cut from a cobalt plate material having a purity of 99.9% (manufactured by The NIlaco Corporation, thickness: 0.1 mm, width: 50 mm, length: 50 mm).

[Preparation Example 4 of Catalyst]

A $FeF_3$ catalyst was prepared and analyzed using the same method as that of Preparation Example 1 of the catalyst, except that the aluminum porous body was changed to a small piece (thickness: 0.10 mm, width: 5 mm, length: 5 mm) cut from an iron plate material having a purity of 99.998% (manufactured by The NIlaco Corporation, thickness: 0.10 mm, width: 50 mm, length: 50 mm).

[Preparation Example 5 of Catalyst]

A $CrF_3$ catalyst was prepared and analyzed using the same method as that of Preparation Example 1 of the catalyst, except that the aluminum porous body was changed to a small piece (thickness: 2.0 mm, width: 5 mm, length: 5 mm) cut from a chromium plate material having a purity of 99.9% (manufactured by The NIlaco Corporation, thickness: 2.0 mm, width: 50 mm, length: 50 mm).

[Preparation Example 6 of Catalyst]

A $VF_3$ catalyst was prepared and analyzed using the same method as that of Preparation Example 1 of the catalyst, except that the aluminum porous body was changed to a small piece (thickness: 0.1 mm, width: 5 mm, length: 5 mm) cut from a vanadium plate material having a purity of 99.7% (manufactured by The NIlaco Corporation, thickness: 0.1 mm, width: 50 mm, length: 50 mm).

[Preparation Example 7 of Catalyst]

A $ScF_3$ catalyst was prepared and analyzed using the same method as that of Preparation Example 1 of the catalyst, except that the aluminum porous body was changed to a small piece (thickness: 0.25 mm, width: 5 mm, length: 5 mm) cut from a scandium plate material having a purity of 99.9% (manufactured by The NIlaco Corporation, thickness: 0.25 mm, width: 25 mm, length: 25 mm).

[Example 1]

Using substantially the same device as the iodine heptafluoride production device illustrated in FIG. 1, iodine heptafluoride was produced. A bright annealing tube (reactor) including 84 g of the catalyst ($AlF_3$ porous body) prepared in Preparation Example 1 of the catalyst was heated with an electric furnace to adjust the temperature in the bright annealing tube (that is, the reaction temperature) to 280°C. Accordingly, the temperature of the catalyst was also 280°C.

Next, a liquid mixture consisting of hydrogen fluoride and iodine pentafluoride was accommodated in the vaporizer, and was heated to 40°C. The content of hydrogen fluoride in the liquid mixture (in Table 1, shown as "HF concentration") was 10% by mass with respect to the content of iodine pentafluoride. Next, by blowing nitrogen gas to the liquid phase of the liquid mixture heated to 40°C to vaporize iodine pentafluoride, gas containing iodine pentafluoride gas was obtained and supplied to the bright annealing tube. The flow rate of the nitrogen gas blown to the liquid mixture was 800 sccm in terms of 101 kPa at 0°C. At this time, the flow rate of iodine pentafluoride gas was 40 sccm when the concentration of iodine pentafluoride in the gas containing iodine pentafluoride gas was measured and calculated by Fourier transform infrared spectroscopy.

Next, 100% by volume fluorine gas was blown to the liquid phase of the liquid mixture in the vaporizer at a flow rate of 160 sccm to vaporize iodine pentafluoride (that is, the vaporization temperature was 40°C). As a result, raw material mixed gas containing iodine pentafluoride gas, hydrogen fluoride gas, fluorine gas, and nitrogen gas was produced and thus was supplied to the bright annealing tube. That is, the raw material mixed gas in which a composition ratio (volume ratio) with respect to 100 of the total amount of iodine pentafluoride gas and fluorine gas was iodine pentafluoride:fluorine gas = 1:4 was supplied to the bright annealing tube. Accordingly, the ratio $[F_2]/[IF_5]$ of the molar amount $[F_2]$ of the fluorine gas to the molar amount $[IF_5]$ of the iodine pentafluoride in the raw material mixed gas was 4.0. At this time, the period of time (reaction time) in which the raw material mixed gas remained in the bright annealing tube was 22 seconds.

By circulating the raw material mixed gas under the conditions for 1 hour, the reaction of obtaining iodine heptafluoride from fluorine gas and iodine pentafluoride was continuously performed. That is, the operation of returning the reaction mixture gas exhausted from the bright annealing tube to the bright annealing tube to perform the reaction was continuously performed for 1 hour. By performing Fourier transform infrared spectroscopy on the reaction mixture gas after completion of the 1-hour reaction, the concentrations of iodine pentafluoride, iodine heptafluoride, and hydrogen fluoride in the reaction mixture gas were measured. At this time, assuming that the amount of nitrogen gas was not changed, the composition of the reaction mixture gas and the conversion ratio of iodine pentafluoride, that is, the yield of iodine heptafluoride with respect to iodine pentafluoride were calculated. Table 1 shows the results.

The concentration of iodine pentafluoride in the raw material mixed gas before the reaction was calculated as follows. That is, the concentration of iodine pentafluoride in the raw material mixed gas before the reaction was assumed to be the same as the sum of the concentration of iodine pentafluoride in the reaction mixture gas after the reaction and the concentration of iodine heptafluoride in the reaction mixture gas after the reaction, and was calculated from the concentration of iodine pentafluoride in the reaction mixture gas after the reaction and the concentration of iodine heptafluoride, and optionally from the concentration of dilution gas and the flow rate of the reaction mixture gas after the reaction.

The Fourier transform infrared spectroscopy was performed using a Fourier transform infrared spectrophotometer Nicolet iS5 (manufactured by Thermo Fisher Scientific Inc.), and the concentrations of iodine pentafluoride, iodine heptafluoride, and hydrogen fluoride were measured by the analysis. The measurement wavelength (wavenumber) used for the analysis of the infrared spectrophotometer was 710 $cm^{-1}$ for iodine pentafluoride, was 749 $cm^{-1}$ for iodine heptafluoride, and was 4039 $cm^{-1}$ for hydrogen fluoride.

The yield of iodine heptafluoride with respect to iodine pentafluoride can be calculated from the following expression.

Yield of Iodine Heptafluoride (%) = Concentration of Iodine Heptafluoride (% by volume)/[Concentration of Iodine Heptafluoride (% by volume) + Concentration of Iodine Pentafluoride (% by volume)]

[Table 1]

| | Catalyst | Vaporization Temperature (°C) | Reaction Temperature (°C) | Reaction Time (s) | Flow Rate (sccm) | | | HF Concentration (% by mass) | Molar Ratio $F_2/IF_5$ | Yield (%) |
|---|---|---|---|---|---|---|---|---|---|---|
| | | | | | $IF_5$ | $F_2$ | $N_2$ | | | |
| Ex. 1 | $AlF_3$ | 40 | 280 | 22 | 40 | 160 | 800 | 10 | 4 | 70.8 |
| Ex. 2 | $NiF_2$ | 40 | 280 | 22 | 40 | 160 | 800 | 10 | 4 | 98.3 |
| Ex. 3 | $CoF_2$ | 40 | 280 | 22 | 40 | 160 | 800 | 10 | 4 | 87.5 |
| Ex. 4 | $FeF_3$ | 40 | 280 | 22 | 40 | 160 | 800 | 10 | 4 | 90.3 |
| Ex. 5 | $CrF_3$ | 40 | 280 | 22 | 40 | 160 | 800 | 10 | 4 | 56.2 |
| Ex. 6 | $VF_3$ | 40 | 280 | 22 | 40 | 160 | 800 | 10 | 4 | 54.8 |
| Ex. 7 | $ScF_3$ | 40 | 280 | 22 | 40 | 160 | 800 | 10 | 4 | 57.7 |
| Ex. 8 | $\alpha\text{-}Al_2O_3$ | 40 | 280 | 22 | 40 | 160 | 800 | 10 | 4 | 65.1 |
| Ex. 9 | $AlF_3$ | 10 | 280 | 22 | 35 | 160 | 800 | 10 | 5 | 54.2 |
| Ex. 10 | $AlF_3$ | 80 | 280 | 22 | 58 | 160 | 800 | 10 | 3 | 60.3 |
| Ex. 11 | $AlF_3$ | 40 | 200 | 22 | 40 | 160 | 800 | 10 | 4 | 64.1 |
| Ex. 12 | $AlF_3$ | 40 | 380 | 22 | 40 | 160 | 800 | 10 | 4 | 59.1 |
| Ex. 13 | $AlF_3$ | 40 | 280 | 10 | 40 | 160 | 800 | 10 | 4 | 52.8 |
| Ex. 14 | $AlF_3$ | 40 | 280 | 88 | 40 | 160 | 800 | 10 | 4 | 75.8 |
| Ex. 15 | $AlF_3$ | 40 | 280 | 100 | 40 | 160 | 800 | 10 | 4 | 76.2 |
| Ex. 16 | $AlF_3$ | 40 | 280 | 200 | 40 | 160 | 800 | 10 | 4 | 76.5 |
| Ex. 17 | $AlF_3$ | 40 | 280 | 22 | 40 | 50 | 950 | 10 | 1 | 53.7 |
| Ex. 18 | $AlF_3$ | 40 | 280 | 22 | 40 | 500 | 500 | 10 | 13 | 76.0 |
| Ex. 19 | $AlF_3$ | 40 | 280 | 22 | 40 | 990 | 10 | 10 | 25 | 71.4 |
| Ex. 20 | $AlF_3$ | 9 | 280 | 22 | 32 | 1000 | 0 | 10 | 31 | 50.7 |
| Ex. 21 | $AlF_3$ | 40 | 280 | 22 | 6 | 160 | 0 | 10 | 27 | 66.6 |
| Ex. 22 | $AlF_3$ | 40 | 280 | 22 | 40 | 160 | 800 | 0.1 | 4 | 52.4 |
| Ex. 23 | $AlF_3$ | 40 | 280 | 22 | 40 | 160 | 800 | 1 | 4 | 58.2 |
| Ex. 24 | $AlF_3$ | 40 | 280 | 22 | 40 | 160 | 800 | 15 | 4 | 64.3 |
| Ex. 25 | $AlF_3$ | 40 | 280 | 22 | 40 | 160 | 800 | 20 | 4 | 55.1 |

(continued)

|  | Catalyst | Vaporization Temperature (°C) | Reaction Temperature (°C) | Reaction Time (s) | Flow Rate (sccm) | | | HF Concentration (% by mass) | Molar Ratio $F_2/IF_5$ | Yield (%) |
|---|---|---|---|---|---|---|---|---|---|---|
|  |  |  |  |  | $IF_5$ | $F_2$ | $N_2$ |  |  |  |
| Comp. Ex. 1 | None | 40 | 280 | 22 | 40 | 160 | 800 | 10 | 4 | 32.2 |
| Comp. Ex. 2 | $AlF_3$ | 40 | 280 | 22 | 40 | 160 | 800 | 0.01 | 4 | 46.5 |
| Comp. Ex. 3 | $AlF_3$ | 40 | 280 | 22 | 40 | 160 | 800 | 25 | 4 | 37.8 |

[Example 2]

The reaction and the analysis were performed using the same method as that of Example 1, except that the catalyst was changed to the $NiF_2$ catalyst prepared in Preparation Example 2 of the catalyst. Table 1 shows the results.

[Example 3]

The reaction and the analysis were performed using the same method as that of Example 1, except that the catalyst was changed to the $CoF_2$ catalyst prepared in Preparation Example 3 of the catalyst. Table 1 shows the results.

[Example 4]

The reaction and the analysis were performed using the same method as that of Example 1, except that the catalyst was changed to the $FeF_3$ catalyst prepared in Preparation Example 4 of the catalyst. Table 1 shows the results.

[Example 5]

The reaction and the analysis were performed using the same method as that of Example 1, except that the catalyst was changed to the $CrF_3$ catalyst prepared in Preparation Example 5 of the catalyst. Table 1 shows the results.

[Example 6]

The reaction and the analysis were performed using the same method as that of Example 1, except that the catalyst was changed to the $VF_3$ catalyst prepared in Preparation Example 6 of the catalyst. Table 1 shows the results.

[Example 7]

The reaction and the analysis were performed using the same method as that of Example 1, except that the catalyst was changed to the $ScF_3$ catalyst prepared in Preparation Example 7 of the catalyst. Table 1 shows the results.

[Example 8]

The reaction and the analysis were performed using the same method as that of Example 1, except that the catalyst was changed to an $\alpha$-$Al_2O_3$ catalyst (manufactured by Nikkato Corporation, purity: 99.5%). Table 1 shows the results.

[Comparative Example 1]

The reaction and the analysis were performed using the same method as that of Example 1, except that the catalyst was not used (the catalyst was not filled in the reactor). Table 1 shows the results.

[Example 9]

The reaction and the analysis were performed using the same method as that of Example 1, except that the flow rate of iodine pentafluoride gas was adjusted to 35 sccm by adjusting the vaporization temperature to 10°C. Table 1 shows the results.

[Example 10]

The reaction and the analysis were performed using the same method as that of Example 1, except that the flow rate of iodine pentafluoride gas was adjusted to 58 sccm by adjusting the vaporization temperature to 80°C. Table 1 shows the results.

[Example 11]

The reaction and the analysis were performed using the same method as that of Example 1, except that the reaction temperature was adjusted to 200°C. Table 1 shows the results.

[Example 12]

The reaction and the analysis were performed using the same method as that of Example 1, except that the reaction temperature was adjusted to 380°C. Table 1 shows the results.

[Example 13]

The reaction and the analysis were performed using the same method as that of Example 1, except that the retention time was adjusted to 10 s by adjusting the length of the bright annealing tube to 410 mm. Table 1 shows the results.

[Example 14]

The reaction and the analysis were performed using the same method as that of Example 1, except that the retention time was adjusted to 88 s by adjusting the length of the bright annealing tube to 3600 mm. Table 1 shows the results.

[Example 15]

The reaction and the analysis were performed using the same method as that of Example 1, except that the retention time was adjusted to 100 s by adjusting the length of the bright annealing tube to 4100 mm. Table 1 shows the results.

[Example 16]

The reaction and the analysis were performed using the same method as that of Example 1, except that the retention time was adjusted to 200 s by adjusting the length of the bright annealing tube to 8200 mm. Table 1 shows the results.

[Example 17]

The reaction and the analysis were performed using the same method as that of Example 1, except that the flow rate of the fluorine gas blown to the liquid mixture in the vaporizer was adjusted to 50 sccm and the flow rate of the nitrogen gas was adjusted to 950 sccm. Table 1 shows the results.

[Example 18]

The reaction and the analysis were performed using the same method as that of Example 1, except that the flow rate of the fluorine gas blown to the liquid mixture in the vaporizer was adjusted to 500 sccm and the flow rate of the nitrogen gas was adjusted to 500 sccm. Table 1 shows the results.

[Example 19]

The reaction and the analysis were performed using the same method as that of Example 1, except that the flow rate of the fluorine gas blown to the liquid mixture in the vaporizer was adjusted to 990 sccm and the flow rate of the nitrogen gas was adjusted to 10 sccm. Table 1 shows the results.

[Example 20]

The reaction and the analysis were performed using the same method as that of Example 1, except that the vaporization temperature was adjusted to 9°C and the flow rate of the iodine pentafluoride gas was adjusted to 32 sccm by adjusting the flow rate of the fluorine gas blown to the liquid mixture in the vaporizer to 1000 sccm and adjusting the flow rate of the nitrogen gas to 0 sccm. Table 1 shows the results.

[Example 21]

The reaction and the analysis were performed using the same method as that of Example 1, except that the vaporization temperature was adjusted to 40°C and the flow rate of the iodine pentafluoride gas was adjusted to 6 sccm by adjusting the flow rate of the fluorine gas blown to the liquid mixture in the vaporizer to 160 sccm and adjusting the flow rate of the nitrogen gas to 0 sccm. Table 1 shows the results.

[Comparative Example 2]

The reaction and the analysis were performed using the same method as that of Example 1, except that the content of hydrogen fluoride in the liquid mixture was 0.01% by mass with respect to the content of iodine pentafluoride. Table 1 shows the results.

[Example 22]

The reaction and the analysis were performed using the same method as that of Example 1, except that the content of hydrogen fluoride in the liquid mixture was 0.1% by mass with respect to the content of iodine pentafluoride.
Table 1 shows the results.

[Example 23]

The reaction and the analysis were performed using the same method as that of Example 1, except that the content of hydrogen fluoride in the liquid mixture was 1% by mass with respect to the content of iodine pentafluoride. Table 1 shows the results.

[Example 24]

The reaction and the analysis were performed using the same method as that of Example 1, except that the content of hydrogen fluoride in the liquid mixture was 15% by mass with respect to the content of iodine pentafluoride. Table 1 shows the results.

[Example 25]

The reaction and the analysis were performed using the same method as that of Example 1, except that the content of hydrogen fluoride in the liquid mixture was 20% by mass with respect to the content of iodine pentafluoride. Table 1 shows the results.

[Comparative Example 3]

The reaction and the analysis were performed using the same method as that of Example 1, except that the content of hydrogen fluoride in the liquid mixture was 25% by mass with respect to the content of iodine pentafluoride. Table 1 shows the results.
It can be seen from the results of Examples 1 to 8 that, even when $AlF_3$, $NiF_2$, $CoF_2$, $FeF_3$, $CrF_3$, $VF_3$, $ScF_3$, or $\alpha$-$Al_2O_3$ was used as the catalyst, the reaction smoothly progressed, and the yields of iodine heptafluoride were all excellent. In addition, it can be seen from the result of Comparative Example 1 that, even when the catalyst was not used, the yield of iodine heptafluoride decreased.
It can be seen from the result of Example 9 that, when the vaporization temperature was 10°C, the flow rate of iodine pentafluoride decreased, and thus the yield of iodine heptafluoride was lower than that of Example 1. In addition, it can be seen from the result of Example 10 that, when the vaporization temperature was 80°C or higher, the flow rate of iodine pentafluoride increased, and thus the yield of iodine heptafluoride was slightly lower than that of Example 1.

It can be seen from the results of Examples 1 and 11 that, when the reaction temperature was 200°C or lower, the yield of iodine heptafluoride slightly decreased. In addition, it can be seen from the results of Examples 1 and 12 that, when the reaction temperature was 380°C or higher, the yield of iodine heptafluoride slightly decreased. The reason for this is presumed to be that, since the reaction temperature was high, the reverse reaction of the chemical reaction formula (1) occurred.

It can be seen from the results of Examples 13 to 16 that, when the reaction time increased, the yield of iodine heptafluoride increased. Note that, it is considered that, when the reaction time was 100 seconds or longer, the degree to which the yield is improved decreases, and the productivity decreases.

It can be seen from the results of Examples 1, 17, and 18 that, when the ratio $[F_2]/[IF_5]$ of the molar amount $[F_2]$ of the fluorine gas to the molar amount $[IF_5]$ of the iodine pentafluoride in the raw material mixed gas was 1 or less, the yield of iodine heptafluoride decreased. It can be seen from the results of Examples 19 and 20 that, when the ratio $[F_2]/[IF_5]$ of the molar amount $[F_2]$ of the fluorine gas to the molar amount $[IF_5]$ of the iodine pentafluoride in the raw material mixed gas was 30 or more, the amount of fluorine gas was excessive, and thus the yield of iodine heptafluoride decreased. In Example 21, the dilution gas was not present. However, the vaporization of iodine pentafluoride caused by heating the vaporizer and blowing fluorine gas was verified, and the yield of iodine heptafluoride was excellent.

It can be seen from the results of Examples 22 and 23 and Comparative Example 2 that, when the content of hydrogen fluoride in the liquid mixture decreased to be less than 0.1% by mass with respect to the content of iodine pentafluoride, the yield of iodine heptafluoride decreased. The reason for this is presumed to be that, since the concentration of hydrogen fluoride in the liquid mixture was low, the activation of the catalyst by hydrogen fluoride did not sufficiently occur.

It can be seen from the results of Examples 24 and 25 and Comparative Example 3 that, when the content of hydrogen fluoride in the liquid mixture increased to be more than 20% by mass with respect to the content of iodine pentafluoride, the yield of iodine heptafluoride decreased. The reason for this is presumed to be that, since the concentration of hydrogen fluoride in the liquid mixture was high, corrosion of the catalyst occurred.

Reference Signs List

> 1: fluorine gas supply device
> 2: hydrogen fluoride supply device
> 3: dilution gas supply device
> 4, 5, 6: mass flow controller
> 10: iodine pentafluoride
> 11: vaporizer
> 12: heating device
> 20: reactor
> 21: pressure gauge
> 22: pressure regulation valve
> 30: Fourier transform infrared spectrophotometer
> 31: cooling and collecting container
> 32: cooling device
> 33: thermometer

**Claims**

**1.** A method for producing iodine heptafluoride, the method comprising:

> a preparation step of preparing a liquid mixture containing iodine pentafluoride and hydrogen fluoride in which a content of the hydrogen fluoride is 0.1% by mass or more and 20% by mass or less with respect to a content of the iodine pentafluoride;
> a vaporization step of obtaining raw material mixed gas containing iodine pentafluoride gas, hydrogen fluoride gas, and fluorine gas by mixing fluorine gas with the liquid mixture to vaporize the liquid mixture; and
> a reaction step of producing iodine heptafluoride by causing the raw material mixed gas to react in a presence of a catalyst.

2. The method for producing iodine heptafluoride according to claim 1, wherein the preparation step is a step of obtaining the liquid mixture by mixing hydrogen fluoride and liquid iodine pentafluoride.

3. The method for producing iodine heptafluoride according to claim 1 or 2, wherein the vaporization step is a step of obtaining the raw material mixed gas by blowing fluorine gas to the liquid mixture to vaporize the liquid mixture.

4. The method for producing iodine heptafluoride according to claim 1 or 2, wherein the vaporization step is a step of obtaining raw material mixed gas containing iodine pentafluoride gas, hydrogen fluoride gas, fluorine gas, and dilution gas by blowing fluorine gas and the dilution gas to the liquid mixture to vaporize the liquid mixture, and the dilution gas is at least one of nitrogen gas, argon, and helium.

5. The method for producing iodine heptafluoride according to claim 1 or 2, wherein the catalyst contains at least one among metals belonging to period 3 elements or period 4 elements of a periodic table and belonging to any group of group 3 elements to group 13 elements.

6. The method for producing iodine heptafluoride according to claim 1 or 2, wherein the vaporization step is a step of vaporizing the liquid mixture by mixing fluorine gas with the liquid mixture at a temperature of 10°C or higher and 80°C or lower.

7. The method for producing iodine heptafluoride according to claim 1 or 2, wherein a ratio $[F_2]/[IF_5]$ of a molar amount $[F_2]$ of the fluorine gas to a molar amount $[IF_5]$ of the iodine pentafluoride in the raw material mixed gas produced in the vaporization step is 1.0 or more and 30 or less.

8. The method for producing iodine heptafluoride according to claim 1 or 2, wherein a reaction temperature in the reaction step is 150°C or higher and 380°C or lower.

9. The method for producing iodine heptafluoride according to claim 1 or 2, wherein a reaction time in the reaction step is 10 seconds or longer and 100 seconds or shorter.

# FIG. 1

## INTERNATIONAL SEARCH REPORT

| International application No. |
| --- |
| **PCT/JP2023/030866** |

| A. | CLASSIFICATION OF SUBJECT MATTER |
| --- | --- |

*C01B 7/24*(2006.01)i
FI:    C01B7/24

According to International Patent Classification (IPC) or to both national classification and IPC

| B. | FIELDS SEARCHED |
| --- | --- |

Minimum documentation searched (classification system followed by classification symbols)

C01B7/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY (STN); JSTChina (JDreamIII)

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2015-147704 A (CENTRAL GLASS CO LTD) 20 August 2015 (2015-08-20)<br>entire text | 1-9 |
| A | JP 2006-265057 A (JAPAN NUCLEAR CYCLE DEVELOPMENT INST STATES OF PROJECTS) 05 October 2006 (2006-10-05)<br>entire text | 1-9 |
| A | JP 2015-030638 A (CENTRAL GLASS CO LTD) 16 February 2015 (2015-02-16)<br>entire text | 1-9 |
| A | JP 2016-113337 A (CENTRAL GLASS CO LTD) 23 June 2016 (2016-06-23)<br>entire text | 1-9 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/030866**

| Patent document cited in search report | | | Publication date (day/month/year) | Patent family member(s) | | | Publication date (day/month/year) |
|---|---|---|---|---|---|---|---|
| JP | 2015-147704 | A | 20 August 2015 | (Family: none) | | | |
| JP | 2006-265057 | A | 05 October 2006 | (Family: none) | | | |
| JP | 2015-030638 | A | 16 February 2015 | US | 2015/0037242 | A1 | |
| | | | | entire text | | | |
| | | | | EP | 2832686 | A1 | |
| | | | | CN | 104340960 | A | |
| | | | | KR | 10-2015-0016167 | A | |
| JP | 2016-113337 | A | 23 June 2016 | (Family: none) | | | |

Form PCT/ISA/210 (patent family annex) (January 2015)

**REFERENCES CITED IN THE DESCRIPTION**

**Patent documents cited in the description**

- JP 6372340 B
- JP 6252214 B